(19) Europäisches Patentamt
European Patent Office
Office européen des brevets

(11) Publication number: **0 109 727 B1**

(12) # EUROPEAN PATENT SPECIFICATION

(45) Date of publication of patent specification: **12.02.92**

(51) Int. Cl.[5]: **H01M 10/36**, H01M 2/24, C25B 9/00

(21) Application number: **83303904.3**

(22) Date of filing: **05.07.83**

(54) **Electrochemical device.**

(30) Priority: **22.11.82 US 443536**

(43) Date of publication of application: **30.05.84 Bulletin 84/22**

(45) Publication of the grant of the patent: **12.02.92 Bulletin 92/07**

(84) Designated Contracting States: **AT BE CH DE FR GB LI**

(56) References cited:
**EP-A- 0 093 213**
**FR-A- 2 300 426**
**US-A- 3 666 561**
**US-A- 3 717 505**
**US-A- 4 277 317**
**US-A- 4 312 735**

**PATENTS ABSTRACTS OF JAPAN, vol. 6, no. 211(E-137)(1089), 23rd October 1982; & JP - A - 57 115 773 (MEIDENSHA K.K.) 19-07-1982**

**PATENTS ABSTRACTS OF JAPAN, vol. 7, no. 123(E-178)(1268), 27th May 1983; & JP - A - 58 42179 (HITACHI SEISAKUSHO K.K.) 11-03-1983**

(73) Proprietor: **EXXON RESEARCH AND ENGINEERING COMPANY**
**P.O.Box 390, 180 Park Avenue**
**Florham Park, New Jersey 07932(US)**

(72) Inventor: **Grimes, Patrick Gerard**
**504 Mountain Avenue**
**Westfield New Jersey(US)**
Inventor: **Einstein, Harry**
**25 Midvale Drive**
**Springfield New Jersey(US)**
Inventor: **Bellows, Richard James**
**634 Carleton Road**
**Westfield New Jersey(US)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to electrochemical devices and a method of operating them, and more particularly though not exclusively to an improved cell construction which can be useful in vehicular battery systems.

In recent times, the use of lightweight battery materials and cost efficient battery constructions have been of prime interest to the automotive and battery industries. In particular, the use of shunt-current protected systems are of recent interest. U.S. Patent No. US-A-4,346,150; issued : August 24, 1982, teaches a low-cost, lightweight, shunt-current protected battery system featuring a stack of cells constructed of alternating plastic sheets comprising separators and electrodes.

In manifold shunt current protected cells, the hydraulic pumping power tends to decrease with increasing manifold diameters. However, the power required to protect against shunt currents increases as the second power of the manifold diameter. Thus, the protective power to the manifold and the pumping power are inversely coupled.

The present invention relates to an improved construction relative to the manifold-protected design illustrated in the aforementioned U.S. patent specification, US-A-4346150. The current invention seeks to provide a tunnel-protected electrochemical device which optimises the auxiliary power requirements for operating the cell; i.e. a cell which uses the least amount of energy to both hydraulically pump the electrolyte through the cell, and to electrically protect against shunt currents.

US-A-3717505 describes and claims a cell stack for use in an energy conversion system using a liquid electrolyte, which comprises a plurality of metallic electrode assemblies, each of said electrode assemblies including a porous plate to which an electrochemically reactive gas is supplied to provide one-half of the electrochemical couple and an impervious plate electrically and mechanically bonded to said porous plate, portions of said impervious plate being spaced from said porous plate to provide a gas plenum chamber therebetween, said impervious plate being adapted to support a deposit of an electropositive metal on the surface opposite from said plenum chamber, said electrochemical cells including a porous plate from one electrode assembly and an electropositive metal deposit from the next adjacent electrode assembly, a plurality of frames made from an electrically insulating material, each of said frames having a cavity therein which extends transversely therethrough and each also including separate elongated supply and return electrolyte passageways leading to and from said cavity, each electrode assembly being disposed in a recess provided in one surface of one of said frames, said electrode assemblies being sandwiched between adjacent pairs of said frames, the surfaces of each said frames being bonded to said next adjacent frame in a manner to provide a complete seal surrounding the periphery of said cavity, said electrolyte supply and return passageways being in the form of open troughs in one surface of said frames which are closed by the abutting surface of the adjacent bonded frame, said supply and return passageways being respectively in fluid communication with a pair of openings extending transversely through said frame and being both disposed below said recess, said pairs of openings in all said frames being located in aligned relationship in said cell stack and constituting parallel electrolyte inlet and outlet conduits for all of said electrochemical cells in said stack, said trough in each frame which at its one end communicates with said transverse inlet opening completely encircling said opening and communicating at its other end with a distribution chamber leading to the bottom of said cavity, each group of two adjacent electrode assemblies and three frames providing an electrochemical cell. Preferably, the said supply and return passageways are each at least about 30 centimeters in length and not greater than about 0.5 $cm^2$ in cross section to assure intracell electrical insulation.

According to the present invention, there is provided an electrochemical device comprising a plurality of cells which are electrically connected, at least in part, in series, and connected hydraulically, at least in part, in parallel, the cells comprising a plurality of electrode plates alternating with separators which separate adjacent pairs of electrode plates, the electrode plates and separators having one set of aligned apertures forming an electrolyte inlet "manifold" (as defined herein) or duct and another set of aligned apertures forming an electrolyte outlet manifold or duct, elongated channels being formed in one or both faces of the electrode plates or the separators forming passages for electrolyte to pass from the electrolyte inlet manifold or duct to the active surface(s) of the electrode plates and from the latter to the electrolyte outlet manifold or duct wherein further aligned apertures are provided through the electrode plates and separators which intersect each of the channels at a point between the inlet aperture and/or the outlet aperture and the said active surface(s) and form a tunnel through which a protective current is applied, during operation, and wherein the hydraulic pressure drop and electrical resistance along the channels are respectively greater than along the electrolyte inlet manifold or duct and the electrolyte outlet manifold or duct with which the channels communicate.

The term "manifold" is used and defined herein to mean or refer to the inlet or outlet formed by each respective set of aligned apertures in the electrode plates and separators.

Preferably, the channels are relatively long and narrow (in terms of cross-sectional area) to provide relatively high hydraulic pressure drops and electrical resistances along their respective lengths.

The channels may be of serpentine or part-serpentine form. The apertures may intersect the channels about midway along their lengths.

The separators or electrode plates may have channels on both faces, and the channels on one face may be offset relative to the channels on the other face.

A central region of one or both faces of each electrode plate or separator may be recessed relative to a peripheral region, and an undercut portion may provide fluid communication between a respective channel in the peripheral region and the central region.

The device may be in the form of a circulating zinc-bromine electric battery.

The invention also provides a method of operating the electrochemical device as herein described comprising circulating electrolyte in contact with the active surfaces of the electrode plates, and applying a voltage across the tunnel formed by the aligned apertures to provide a protective electric current which reduces or eliminates shunt electric currents in the device. Electrolyte may be passed into contact with the active surfaces of the electrode plates from the electrolyte inlet manifold or duct and recovered from the electrolyte outlet manifold or duct.

With the tunnel protection power system, the protective power is less than the manifold protective power. As the diameter of the manifold increases (for a fixed geometry of connections between the manifold and the cells) the protective power through the tunnel asymptotically approaches a maximum. The tunnel protective power becomes essentially independent of the manifold diameter at larger diameters of the manifold. Thus, the summation of the pumping and tunnel protective power has a lower power requirement than the manifold case and has a minimum value at a lower value than the manifold system.

Embodiments of the present invention seek to optimise the design of a tunnel protected electrochemical device, such that manifolds, tunnels and channels provide for the least consumption of auxiliary power during operation of the system. Embodiments of the invention also seek to decouple the protective power requirements from the hydraulic pumping power requirements.

The subject invention is useful in the manufacture, construction and assembly of many different kinds of electrochemical cells, and the invention should be interpreted as not being limited to a specific system.

It is of particular interest for use in a circulating zinc-bromine battery, constructed in accordance with the teachings advanced in the aforementioned U.S. Patent to: Agustin F. Venero, entitled: Metal Halogen Batteries and Method of Operating Same, Patent No. 4,105,829, issued: August 8, 1978.

The above-mentioned battery system is of particular interest because of its low cost and availability of reactants, its high cell voltage and its high degree of reversibility.

One embodiment of this invention relates to an electrochemical construction comprising a stack of cells each comprised of an integral separator and spacer disposed between adjacent electrodes.

The cells are connected electrically at least in part in series, and connected at least in part in parallel. At least one manifold fluidically communicates with the cells. At least one tunnel is disposed between the manifold and the cells to provide protective current to the electrochemical device. Respective channels connect each cell to the manifold and tunnel. The channels are designed to have a hydraulic pressure drop and an electrical resistance greater than that of the manifold. This is accomplished by physically disposing the channels upon either separators or electrodes with a long and narrow design. This long and narrow channel design will optimize the hydraulic pumping power and electrical protective power consumption of the cell.

For a better understanding of tunnel protected systems, reference should be made to U.S Patent No. 4,277,317; issued: July 7, 1981, and 4,312,735; issued: January 26, 1982.

The following can be achieved with at least some embodiments of the invention :-

(1) An improved electrochemical device;

(2) Optimisation of the auxiliary power requirements of a shunt-current protected electrochemical device;

(3) A construction for an electrochemical device which effectively decouples the auxiliary power requirements such as the hydraulic pumping power from the electrical protective power.

The invention will be better understood with reference, by way of example, to the following detailed description considered in conjunction with the accompanying drawings, in which:-

Figure 1 is a graphical illustration of the auxiliary power requirements of an electrochemical device with respect to manifold size;

Figure 2 shows a partial perspective exploded view of the construction of cells in one form of electrochemical device in accordance with the subject invention;

Figures 2a and 2b are plan views of separator and electrode elements, respectively, of the construction shown in Figure 2; and

Figures 3a, 3b, and 3c are partial exploded plan views of different embodiments of the elements shown in Figure 2.

In multicell electrochemical devices having a plurality of cells in series and having an electrolyte which is a common electrolyte to two or more such cells and which includes shared electrolyte, shunt current losses occur as a result of electrical electrolyte conductive bypass paths through the electrolyte around the cells. The present invention is directed to the minimization of shunt currents in such systems and to devices for achieving this result.

As used herein, the term "electrochemical devices" shall be meant to include photoelectrochemical devices such as water photolysis cell devices, photogalvanic cell devices, liquid solar cell devices and to include other electrochemical devices such as batteries, fuel cell devices, chlor-alkali cell devices, metal-air devices, sea water batteries, electrolyzers, electrochemical synthesizers, and electrowinning devices, as well as other devices employing cathodes, anodes and common electrolytes, including bipolar and monopolar multicell devices, and including devices having a plurality of electrolytes (e.g., catholytes and anolytes), or liquid metals.

As used herein, the expression "minimization of shunt currents" shall be used to mean reduction of shunt currents or elimination of shunt currents.

Generally speaking, embodiments of the invention feature an improved electrochemical design for a device such as a battery, that minimizes the auxiliary power requirements thereof. Figure 1 illustrates in graphical form the advantage of designing an electrochemical system utilizing tunnel protection rather than manifold protection.

In a manifold protection system, the protective power increases proportionally to the second power of the diameter of the manifold. The pumping power is proportional to a higher power to the diameter and decreases as the diameter increases. Thus, the protective power to the manifold and the pumping power are directly and inversely coupled. A decrease in one results in an increase in the other, and there is a minimum total power. In the figure, curve #1 represents the summation of the pumping and manifold protective power. The pumping power curve is labeled No. 5 and the manifold power curve is labeled No. 3.

With the tunnel protection power system, the protective power is less than the manifold protective power. As the diameter of the manifold increases (for a fixed geometry of connections between the manifold and the cells) the protective power through the tunnel asymptotically approaches a maximum. The tunnel protective power becomes essentially independent of the manifold diameter at larger diameters of the manifold. Thus, the summation of the pumping and tunnel protective power has a lower power than the manifold case and has a minimum value at a lower value than the manifold system. This is illustrated in Figure 1 as the curve labeled #2. The tunnel protective power is labeled #4. Thus, at higher manifold diameters, the pumping power and the tunnel protective power are decoupled and become somewhat independent of one another. Greater design flexibility can be utilized in designing electrochemical systems to use tunnel protection rather than manifold protection, as aforementioned.

With respect to tunnel protection, the optimum parameters are sought for a low profile battery similar to that shown in U.S. Patent No. 4,346,150.

The tunnel protection power requirements are greatly a function of the resistance and, thus, the geometry of the electrolyte channels connecting the electrolyte manifolds and the cells. Designs which have longer, thinner channels when consistant with other design factors are better. The designs must consider the hydraulic pathways for the flowing electrolyte to minimize the pressure drops through the battery system, and allow uniform flow of electrolytes to the cells as well as minimize the shunt current protection power. For a better understanding of tunnel protected devices, reference should be made to U.S. Pat. No. 4,227,317; issued: July 7, 1981.

As previously taught, one method of shunt-current protection is the passage of an appropriate current through the common electrolyte manifold, such that the voltage drop through a manifold segment between two cells is equal to the voltage of a cell, $V_c$. The protective current, $k_o$, required for this condition, is:

$$ko = \frac{V_c}{R_m} = \frac{V_o\ 1 + IR_e}{R_m} \qquad (1)$$

where:

$R_m$ = resistance of manifold segment; p 1/A

p = specific resistance of electrolyte
l = length of manifold segment
A = cross sectional area of manifold
$V_c$ = $V_o + IR_e$ = voltage of a cell
$V_o$ = open circuit voltage of a single cell
I = cell stack current; plus on charge, minus on discharge
$R_e$ = summation of cell resistances and polarizations

When this condition is met, there is no voltage gradient between the cells and the manifold. The $k_o$ current is independent of the number of cells in series.

Another method incorporates connections (tunnels) between the channels connecting the manifolds and the cells and passes an appropriate current, to, through the common electrolyte network from the first channel/tunnel node to the last channel/tunnel node. The tunnel dimensions and, thus, resistances are graduated such that the voltage drop through a tunnel connecting the channels to two cells is equal to the voltage of a cell, $V_c = V_o + IR_e$.

The tunnel protective current, to, for this condition is:

$$t_o = \frac{V_o + IR_e}{R_m} \quad \frac{(\lambda'^{N/2}-1)^2}{\lambda'^{N}+1} + t_{n/2} \qquad (2)$$

and

$\lambda' = c/2 + (c/2)^2 - 1$ (3)

and

$c = 2 + R_m/R_c$ (4)

where
N = number of cells in series
$R_c$ = resistance of the channel between the tunnel and the manifold
$t_{n/2}$ = current in the mid-tunnel

When these conditions are met, there is no voltage gradient between the cells and the channel/tunnel points and no current flows from the cells through the common electrolyte. The difference between the amounts of protective currents, $k_o$ and $t_o$, [equations (1) and (2)] by the manifold and tunnel methods, respectively, when the central tunnel has large resistance, is mainly the expression in brackets $(\lambda'N^{/2}-1)^2/(\lambda'^{N}+1)$. This expression has a value of less than one.

The $t_o$ current is less when the value of the bracket term is less. For a given number of cells in series, N, the bracket term is smaller when λ' has a lower value. For a given $R_m$, λ' becomes smaller with a smaller $R_m$, i.e. larger cross sectional area of manifold (equations (3) and (4). With a given or fixed $R_m$, the change in the values of $t_o$, with a decrease in the value of $R_m$, becomes less and $t_o$ becomes a constant.

The value of $t_o$ is controlled by the value of $R_c$ at low $R_m$. If $R_c$ is large, then the manifold cross sectional area (diameter) can have a large value without affecting the tunnel protective current.

Uniform supply to and removal from the series of cells requires that the pressure drop in the stack of cells be largely in the cells. The pressure drop in the manifolds must not be the controlling main pressure drop. This requires that the manifold cross sectional area be relatively large for a given number of cells in series, and increase as the number of cells increase.

If manifold protection is used, there is a coupled and direct relationship between the protective current, $k_o$, and the manifold area. (The current increases with the square of the diameter of the manifold.) With tunnel protection there is no direct relationship between manifold area and protective current when the channel resistance is relatively large. The protective current value becomes essentially independent of manifold area. The hydraulic circuitry and the protective current electrolytic circuitry are decoupled.

Systems incorporating tunnel protection require designs with a small $R_m/R_c$ ratio and a relatively large $R_c$ for low power usage.

In some of the zinc-bromine battery designs, channels are needed which are long and have a small cross sectional area. This must be compatable with injection molding tooling design to move plastic through thin cross sections of molds.

In the electrolyte network of N cells, there are N-1 manifold segments and tunnels. The voltage to pass the protective current, in either case, is (N-1) ($V_o$ + $IR_e$). The minimum protective power requirements are, thus:

$$(N-1)\ (V_o + IR_e)\ k_o$$

for the manifold protection, and

$$(N-1)\ (V_o + IR_e)\ t_o$$

for the tunnel protection. The total protective powers are these values multiplied by the number of manifolds.

In summary, an optimum tunnel protected design will require that the hydraulic pressure drop and the electrical resistance (due to the electrolyte) in the respective channels should be greater than that of the manifold.

Referring to Figure 2, a partial exploded section of the battery stack 10, is shown. The stack 10 comprises alternating sheets of separators 11 and bipolar electrodes 12, respectively, as previously illustrated and described in U.S. Patent No. 4,346,150.

The present stack 10 is designed for tunnel protection, rather than the manifold protection shown in the aforementioned patent.

Other teachings, such as the operation fabrication and assembly of the battery stack 10 are meant to be incorporated herein by way of reference.

The separators 11 and electrodes 12 are shown in more detail in Figures 2a and 2b, respectively.

The separators 11 have molded therein channels 13, which connect to manifold holes 14. When the stack is assembled, manifold holes 14 become a manifold section. The channels 13 are molded, formed or machined, etc. on the top and bottom of the separator 11, as well as on the front and rear faces of the separator 11, in keeping with the bipolar design.

However, the channels 13 could have been formed, molded, or machined into the electrodes 12, if so desired. In order to do this, however, the electrodes 12 and the separators 11 would probably require a change of molding with respect to center undercuts. This change of molding is for the purpose of maintaining proper electrolyte flow to the electrically conductive center portions 15 of electrodes 12.

Figure 3b illustrates in still greater detail the separator 11 of Figures 2 and 2a. The channel 13 is shown molded on a top position of both front and rear faces of the separator 11. The bottom portion is not shown for the sake of brevity, and would be similar to the top portion.

The channels 13, are connected to manifold holes 14, as aforementioned. The channels convey electrolyte from the manifold to the center portion 16 of the separator 11 by intermediate conduit undercut 17 which is transversely disposed across the width of the center portion 16.

The protective current is applied via the tunnels, which like the manifolds are formed, molded or machined, etc. holes 18. When the stack 10 is fully assembled, holes 18 become tunnels through the cells as does the manifold holes 14 become a manifold section.

The tunnels and the manifolds are disposed transverse to the channels which fluidically communicate between them and the cells (center portions) of the stack 10.

Figures 3a and 3c show other embodiments of the separator 11 depicted in Figure 3b.

For the sake of brevity, like elements have been given the prime designation in Figure 3a of the elements of Figure 3b, and the double prime designation in Figure 3c.

It will be understood that all three embodiments operate and function in an essentially similar manner. The separator 11'' has channels 13'' which are doubled over and which are therefore greater in length. The separator 11' shows channel holes 18' which are disposed midway between the manifold (holes 14') and the cells (center portions 16').

All of the separators 11, 11' and 11'', respectively teach that the optimum design requires a long and thin channel, whose hydraulic pressure drop and electrical resistance is greater than the manifold. For this purpose, it will also be noted that manifold holes 14, 14' and 14'' are considerably larger than the width of the channels 13, 13' and 13'', respectively. Manifolds, tunnels, holes, and channels can be formed, molded or machined into the plastic in a number of ways known in the art.

**Claims**

1. An electrochemical device comprising a plurality of cells which are electrically connected, at least in part, in series, and connected hydraulically, at least in part, in parallel, the cells comprising a plurality of electrode plates (12) alternating with separators (11) which separate adjacent pairs of electrode plates, the electrode plates and separators having one set of aligned apertures (14) forming an electrolyte inlet manifold or duct and another set of aligned apertures (14) forming an electrolyte outlet manifold or duct, elongated channels (13) being formed in one or both faces of the electrode plates or the separators forming passages for electrolyte to pass from the electrolyte inlet manifold or duct to the active surface(s) (16) of the electrode plates and from the latter to the electrolyte outlet manifold or duct, wherein further aligned apertures (18) are provided through the electrode plates and separators which intersect each of the channels at a point between the inlet aperture and/or the outlet aperture and the said active surface(s) and form a tunnel through which a protective current is applied, during operation, and wherein the hydraulic pressure drop and electrical resistance along the channels (13) are respectively greater than along the electrolyte inlet manifold or duct and the electrolyte outlet manifold or duct with which the channels communicate.

2. A device as in claim 1 wherein the channels (13) are relatively long and narrow (in terms of cross-sectional area) to provide relatively high hydraulic pressure drops and electrical resistances along their respective lengths.

3. A device as in claim 1 or claim 2 wherein the channel (13) are of serpentine or part-serpentine form.

4. A device as in any one of claims 1 to 3 wherein the apertures (18) intersect the channels (13) about midway along their lengths.

5. A device as in any one of claims 1 to 4 wherein the separators (11) or electrode plates (12) have channels (13) on both faces, and the channels on one face are offset relative to the channels on the other face.

6. A device as in and one of claims 1 to 5 wherein a central region (15) of one or both faces of each electrode plate (12) or separator (11) is recessed relative to a peripheral region and an undercut portion (17) provides fluid communication between a respective channel in the peripheral region and the central region.

7. A device as in any one of claims 1 to 6 in the form of a circulating zinc-bromine electric battery.

8. A method of operating the electrochemical device of any one of claims 1 to 7 comprising circulating electrolyte in contact with the active surfaces (16) of the electrode plates (12), and applying a voltage across the tunnel formed by the aligned apertures (18) to provide a protective electric current which reduces or eliminates shunt electric currents in the device.

9. A method as in any one of claims 1 to 8 wherein electrolyte is passed into contact with the active surfaces (16) of the electrode plates (12) from the electrolyte inlet manifold or duct and recovered from the electrolyte outlet manifold or duct.

## Revendications

1. Dispositif électrochimique comportant plusieurs cellules qui sont reliées électriquement, au moins en partie, en série, et reliées hydrauliquement, au moins en partie, en parallèle, les cellules comportant plusieurs plaques d'électrode (12) alternées avec des séparateurs (11) qui séparent des paires adjacentes de plaques d'électrode, les plaques d'électrode et les séparateurs ayant un ensemble d'ouvertures alignées (14) formant un collecteur ou conduit d'entrée d'électrolyte et un autre ensemble d'ouvertures alignées (14) formant un collecteur ou conduit de sortie d'électrolyte, des canaux allongés (13) étant formés dans une ou les deux faces des plaques d'électrode ou des séparateurs en formant des passages pour l'électrolyte afin de passer du collecteur ou conduit d'entrée d'électrolyte vers la ou les surfaces actives (16) des plaques d'électrode et de ces dernières vers le collecteur ou conduit de sortie d'électrolyte, dans lequel d'autres ouvertures alignées (18) sont prévues à travers les plaques d'électrode et les séparateurs, lesquelles coupent chacun des canaux en un point entre l'ouverture d'entrée et/ou l'ouverture de sortie et la ou lesdites surfaces actives et forment un tunnel à travers lequel est appliqué un courant de protection, pendant le fonctionnement, et dans lequel la chute de pression hydraulique et la résistance électrique le long des canaux (13) sont respectivement plus grandes que le long du collecteur ou conduit d'entrée d'électrolyte et du collecteur ou conduit de sortie d'électrolyte avec lesquels communiquent les canaux.

**2.** Dispositif selon la revendication 1, dans lequel les canaux (13) sont relativement longs et étroits (en termes de surface de section) afin d'assurer des chutes de pression hydraulique et des résistances électriques relativement élevées sur leurs longueurs respectives.

**3.** Dispositif selon la revendication 1 ou la revendication 2, dans lequel les canaux (13) sont en forme de serpentin ou partiellement en serpentin.

**4.** Dispositif selon l'une quelconque des revendications 1 à 3, dans lequel les ouvertures (18) coupent les canaux (13) environ à mi-chemin de leurs longueurs.

**5.** Dispositif selon l'une quelconque des revendications 1 à 4, dans lequel les séparateurs (11) ou les plaques d'électrode (12) ont des canaux (13) sur les deux faces, et les canaux sur une face sont décalés par rapport aux canaux sur l'autre face.

**6.** Dispositif selon l'une quelconque des revendications 1 à 5, dans lequel une zone centrale (15) d'une ou des deux faces de chaque plaque d'électrode (12) ou séparateur (11) est renfoncée par rapport à une zone périphérique et une partie découpée (17) assure une communication de fluide entre un canal respectif dans la zone périphérique et la zone centrale.

**7.** Dispositif selon l'une quelconque des revendications 1 à 6 sous la forme d'une batterie électrique zinc-brome à circulation.

**8.** Procédé de mise en oeuvre du dispositif électrochimique selon l'une quelconque des revendications 1 à 7, comprenant la circulation de l'électrolyte en contact avec les surfaces actives (16) des plaques d'électrode (12), et l'application d'une tension aux bornes du tunnel formé par les ouvertures alignées (18) afin de fournir un courant électrique de protection qui réduit ou élimine les courants électriques dérivés dans le dispositif.

**9.** Procédé selon l'une quelconque des revendications 1 à 8, dans lequel l'électrolyte est amené en contact avec les surfaces actives (16) des plaques d'électrode (12) par le collecteur ou conduit d'entrée d'électrolyte et récupéré par le collecteur ou conduit de sortie d'électrolyte.

**Patentansprüche**

**1.** Elektrochemische Vorrichtung, umfassend eine Vielzahl von Zellen, die elektrisch zumindest teilweise in Serie geschaltet und hydraulisch zumindest teilweise parallel geschaltet sind, wobei die Zellen eine Vielzahl von Elektrodenplatten (12) umfassen, die mit Separatoren (11), welche benachbarte Paare von Elektrodenplatten trennen, abwechseln, wobei die Elektrodenplatten und Separatoren einen Satz ausgerichteter Öffnungen (14), welche eine Elektrolyteinlaßverzweigungsleitung bzw. einen -kanal bilden, und einen weiteren Satz ausgerichteter Öffnungen (14), die eine Elektrolytauslaßverzweigungsleitung bzw. einen -kanal bilden, haben, wobei langgestreckte Rinnen (13) in einer oder beiden Seiten der Elektrodenplatten oder der Separatoren gebildet werden, welche Durchgänge bilden, damit Elektrolyt von der Elektrolyteinlaßverzweigungsleitung bzw. dem -kanal zu der (den) aktiven Oberfläche(n) (16) der Elektrodenplatten und von letzteren zu der Elektrolytauslaßverzweigungsleitung bzw. dem -kanal gelangen kann, worin weitere ausgerichtete Öffnungen (18) durch die Elektrodenplatten und Separatoren vorgesehen sind, die jede der Rinnen an einem Punkt zwischen der Einlaßöffnung und/oder der Auslaßöffnung und der (den) besagten aktiven Oberfläche(n) schneiden und einen Tunnel bilden, durch den während des Betriebes ein Schutzstrom angelegt wird, und worin der hydraulische Druckabfall und elektrische Widerstand entlang der Rinnen (13) jeweils größer sind als entlang der Elektrolyteinlaßverzweigungsleitung bzw. des -kanals und der Elektrolytauslaßverzweigungsleitung bzw. des -kanals, mit denen die Rinnen in Verbindung stehen.

**2.** Vorrichtung nach Anspruch 1, worin die Rinnen (13) relativ lang und eng (hinsichtlich des Querschnittsbereiches) sind, um für relativ hohe hydraulische Druckabfälle und elektrische Widerstände entlang ihrer jeweiligen Längen zu sorgen.

3. Vorrichtung nach Anspruch 1 oder 2, worin die Rinnen (13) Serpentinenform oder Teilserpentinenform haben.

4. Vorrichtung nach irgendeinem der Ansprüche 1 bis 3, worin die Öffnungen (18) die Rinnen (13) etwa in der Mitte ihrer Längen schneiden.

5. Vorrichtung nach irgendeinem der Ansprüche 1 bis 4, worin die Separatoren (11) oder Elektrodenplatten (12) Rinnen (13) an beiden Seiten haben und die Rinnen an einer Seite im Verhältnis zu den Rinnen auf der anderen Seite versetzt sind.

6. Vorrichtung nach irgendeinem der Ansprüche 1 bis 5, worin ein zentraler Bereich (15) einer oder beider Seiten jeder Elektrodenplatte (12) oder jedes Separators (11) im Verhältnis zu einem peripheren Bereich vertieft ist und ein unterschnittener Teil (17) für Fluidkommunikation zwischen einer jeweiligen Rinne in dem peripheren Bereich und dem zentralen Bereich sorgt.

7. Vorrichtung nach irgendeinem der Ansprüche 1 bis 6 in Form einer elektrischen Zink-Brom-Umlaufbatterie.

8. Verfahren zum Betreiben der elektrochemischen Vorrichtung nach irgendeinem der Ansprüche 1 bis 7, umfassend das Zirkulieren von Elektrolyt im Kontakt mit den aktiven Oberflächen (16) der Elektrodenplatten (12) und Anlegen einer Spannung über den durch die ausgerichteten Öffnungen (18) gebildeten Tunnel, um für einen elektrischen Schutzstrom zu sorgen, der elektrische Nebenschlußströme in der Vorrichtung reduziert oder eliminiert.

9. Verfahren nach irgendeinem der Ansprüche 1 bis 8, worin Elektrolyt von der Elektrolyteinlaßverzweigungsleitung bzw. dem -kanal in Kontakt mit den aktiven Oberflächen (16) der Elektrodenplatten (12) geleitet und von der Elektrolytauslaßverzweigungsleitung bzw. dem -kanal gewonnen wird.

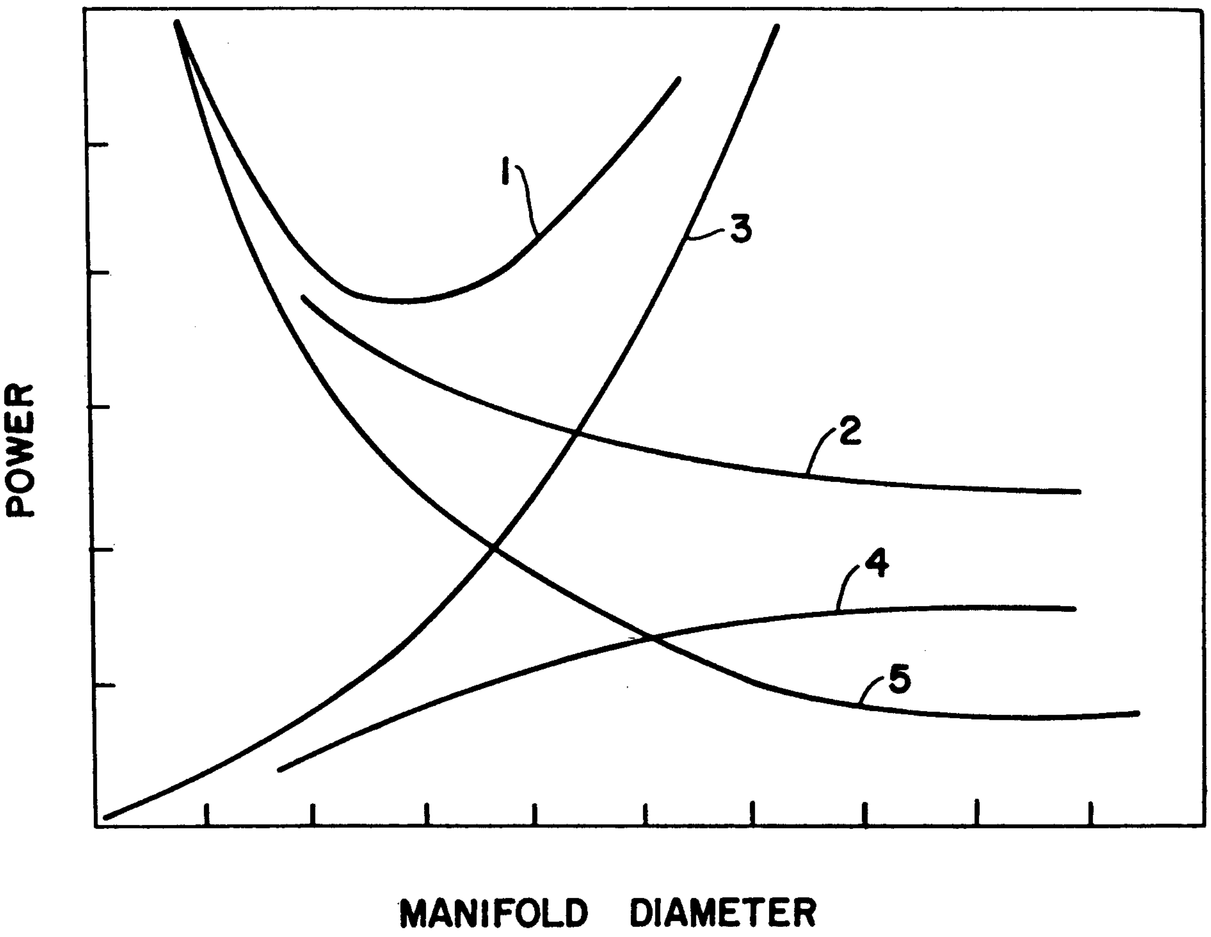


1. Manifold protection power plus pumping power
2. Tunnel protection power plus pumping power
3. Manifold protection power
4. Tunnel protection power
5. Manifold pumping power

FIG. 1

FIG.2

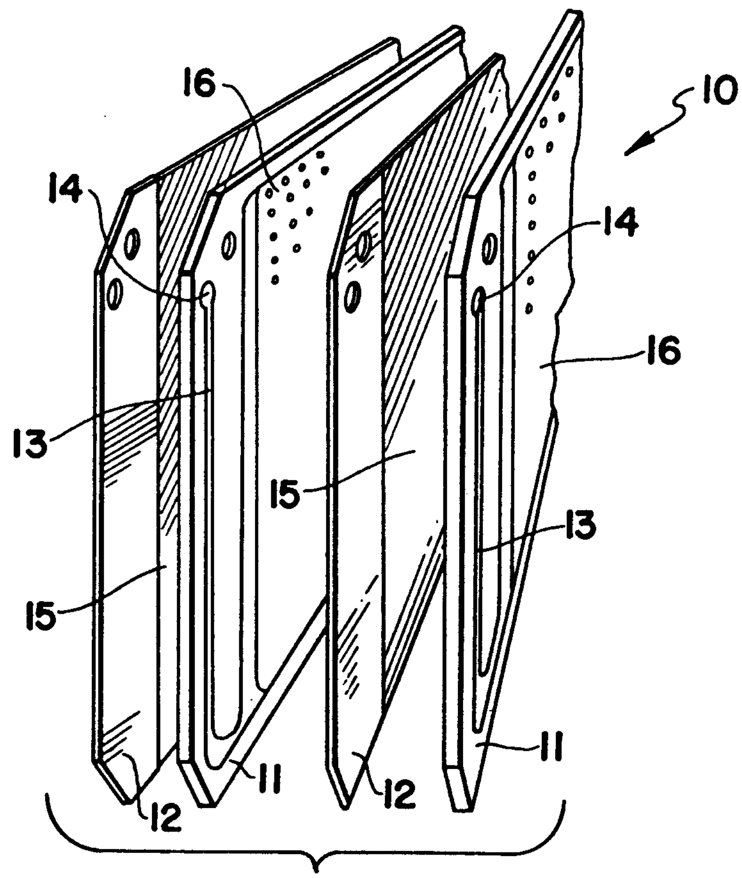


FIG.2a

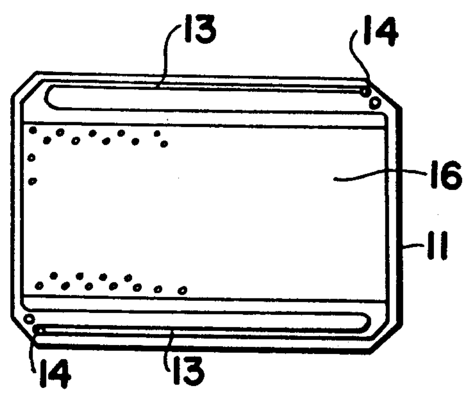


FIG.2b

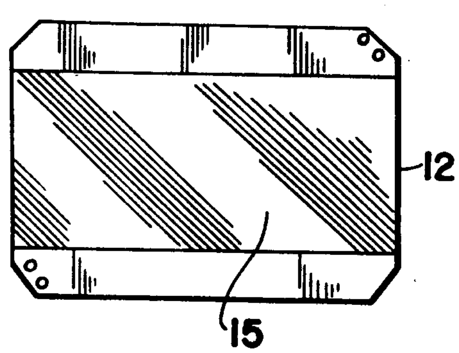

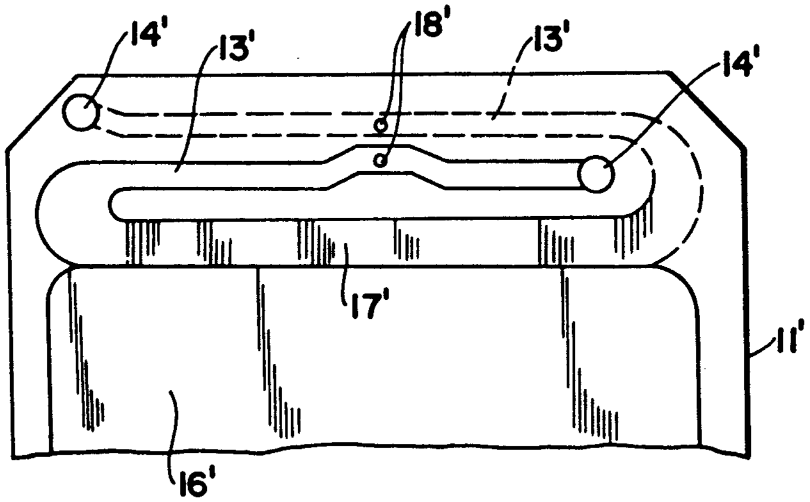

FIG. 3a

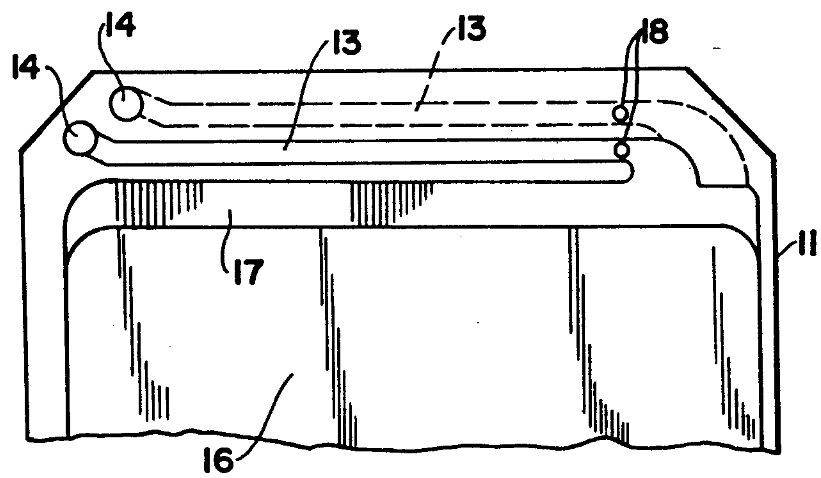

FIG. 3b

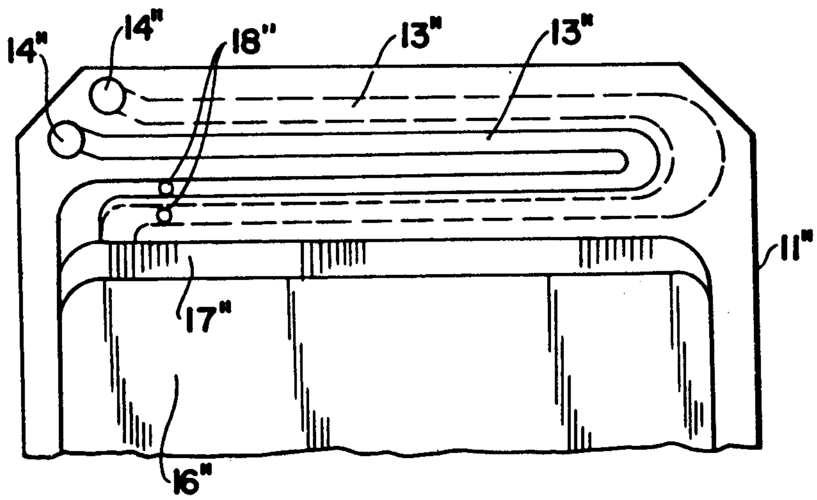

FIG. 3c